# NEW EUROPEAN PATENT SPECIFICATION

(11) **EP 2 799 801 B2**
(45) Date of publication and mention of the opposition decision: **04.10.2023**
(45) Mention of the grant of the patent: 10.05.2017
(21) Application number: 12863238.7
(22) Date of filing: 21.12.2012
(51) Int. Cl.: F27D 15/02, B07B 4/08, C04B 7/47

(54) **BULK-MATERIAL COOLING DEVICE AND BULK-MATERIAL COOLING METHOD**
VORRICHTUNG ZUR KÜHLUNG EINES SCHÜTTGUTS UND VERFAHREN ZUR KÜHLUNG EINES SCHÜTTGUTS
DISPOSITIF ET PROCÉDÉ DE REFROIDISSEMENT DE MATÉRIAU EN VRAC

(30) Priority: 26.12.2011 JP 2011282986
(43) Date of publication of application: 05.11.2014
(73) Proprietor: Kawasaki Jukogyo Kabushiki Kaisha, Kobe-shi, Hyogo 650-8670 (JP)
(72) Inventor: BANDO, Hiroshi, Kobe-shi, Hyogo 650-8670 (JP); ICHITANI, Noboru, Kobe-shi, Hyogo 650-8670 (JP); HAYASHI, Isao, Kobe-shi, Hyogo, 650-8670 (JP); DEI, Koichi, Kobe-shi, Hyogo, 650-8670 (JP); OSAWA, Hiroaki, Kobe-shi, Hyogo, 650-8670 (JP)
(74) Representative: Hooiveld, Arjen Jan Winfried
(86) International application number: PCT/JP2012/008197
(87) International publication number: WO 2013/099186

(56) References cited:
- EP-A1- 0 245 630
- EP-A1- 1 475 594
- WO-A1-94/15161
- WO-A2-2007/141307
- DE-A1-102005 032 518
- DE-C1- 3 131 514
- US-A- 3 831 291
- US-A- 3 831 291
- US-A- 3 836 321
- US-A- 5 871 348
- US-B1- 6 312 252
- Harder J: "Latest trends in clinker cooling", ZKG International - Zement - Kalk - Gips International, Bauverlag BV GmbH, DE, vol. 64, no. 3, 1 March 2011 (2011-03-01), pages 32-42, DE ISSN: 0949-0205
- Helmut Wallis: "Produktübersicht Klinkerkühler", ZKG International, vol. 57, no. 7, 1 January 2004 (2004-01-01), pages 40-49,
- Philip A Alsop, Hung Chen, Herman Tseng: "4.12 Clinker Cooling" In: "The Cement Plant Operations Handbook, Fifth Edition", 1 October 2007 (2007-10-01), Tradeship Publications Ltd. pages 2pp, 12, 60-63,
- K. VON WEDEL: "Performance of IKN grate coolers", Cement International, vol. 5, 2 January 2007 (2007-01-02), pages 96-103,
- K. VON WEDEL: "Clinker cooling in the course of time", ZKG INTERNATIONAL, October 2011 (2011-10), pages 13-19,
- "Keeping Cool at Kamari", World Cement, May 2011 (2011-05), pages 117-124,
- K. von Wedel,: "Process Know How", ZKG INTERNATIONAL, vol. 51, no. 4, April 1998 (1998-04), pages 176-182,
- Clinker Coolers: "Cement Seminar", Process Technology, 1995,
- "Latest Trends in Clinker Cooling", ZKG INTERNATIONAL, vol. 64, no. 3, 2011, pages 32-42,

## Description

### Technical Field

The present invention relates to a device for cooling down a bed of a bulk material such as cement clinker while conveying the bed of the bulk material according to the pre-characterizing clause of claim 1 and to a respective method.

### Background Art

As bulk material cooling devices for cooling down a bed of a bulk material while conveying the bed of the bulk material, there are known clinker cooling devices included in cement plants (see Patent Literatures 1 and 2, for example). Each of Patent Literatures 1 and 2 discloses a clinker cooling device provided subsequent to a kiln for firing cement raw meal. The clinker cooling device feeds cooling air to an intermediate product (cement clinker) that is produced as a result of firing the cement raw meal, thereby rapidly cooling down the intermediate product.

The cement clinker is a granular material or a mass, whose grain diameter varies in the range of about 1 to 25 mm. The cement clinker is fed from the kiln to the clinker cooling device sequentially. The clinker cooling device conveys the cement clinker in the form of a bed. While conveying the cement clinker bed, the clinker cooling device continuously feeds cooling air to the cement clinker bed from below. In this manner, the cement clinker bed is cooled down while being conveyed. Meanwhile, the cooling air exchanges heat with the cement clinker, and is thereby heated up. Conventionally, in order to improve the fuel consumption rate of the cement plant, a technique of recovering heat from the heated air is utilized. In the technique, the heated air is used as combustion air in the kiln and a precalciner.

### Citation List

### Patent Literature

PTL1: Japanese National Phase PCT Laid-Open Publication No. 2006-526750
PTL 2: Japanese National Phase PCT Laid-Open Publication No. 2007-515365

### Summary of Invention

### Technical Problem

In the case of applying the aforementioned heat recovery technique to a clinker cooling device, the height of the bed of the cement clinker tends to be increased in order to increase the amount of heat to recover per unit time. However, in order for the cooling air to pass through the cement clinker bed having such an increased height and sufficiently cool down the cement clinker bed, the pressure of the cooling air needs to be increased. As a result, paradoxically, the amount of power consumed by air blowers for feeding such cooling air has been increasing lately.

In view of the above, an object of the present invention is to improve energy efficiency when cooling down a bed of a bulk material while conveying the bed of the bulk material.

### Solution to Problem

In order to achieve the above object, the inventors of the present invention conducted development of a device for and a method of cooling down a bed of a bulk material. In the course of developing the device and the method, the inventors of the present invention obtained the following findings: if bulk material grains, in particular bulk material grains having widely varying grain diameters, are stacked randomly, then the bulk material grains that have small grain diameters gain entry between the bulk material grains that have large grain diameters. This may result in a high filling rate and cause an increase in pressure loss of the cooling air when the cooling air passes through the bulk material.
The inventors also obtained the following findings: since the bulk material grains that have large grain diameters are in contact with the bulk material grains that have small grain diameters, the heat exchange between the bulk material and the cooling air is not efficiently carried out, which may consequently cause degradation in the cooling performance and heat recovery performance of the bulk material cooling device. Based on these findings, the inventors have conceived an idea that if the filling rate of the bed of the bulk material is reduced, then there is a possibility that the pressure loss of the cooling air will be reduced and chances for the bulk material grains that have large grain diameters to come into contact with the cooling air will increase. The present invention has been made to achieve the aforementioned object, and is based on these findings and conceived idea.

That is, a cooling device according to claim 1, is a device for cooling down a bed of a bulk material while conveying the bed of the bulk material, and includes: a fine grain separating part configured to feed cooling air flowing upward to the bed of the bulk material, and by the cooling air, selectively separate fine grains in the bed of the bulk material to an upper side of the bed; and a rear-stage cooling part provided downstream from the fine grain separating part and configured to feed cooling air to the bed of the bulk material, the cooling air having a flow rate per unit area less than the flow rate per unit area of the cooling air fed at the fine grain separating part.

According to the above configuration, fine grains in the bed of the bulk material are selectively separated to the upper side of the bed. Accordingly, while the bulk material grains that have large grain diameters remain in the lower side of the bed, fine grains previously present between the bulk material grains that have large grain diameters are separated to the upper side of the bed. As a result, at the rear-stage cooling part, the filling rate in the lower side of the bed of the bulk material is reduced, and consequently, more portions of the surfaces of the bulk material grains that have large grain diameters become exposed to gaps. As a result, pressure loss of the cooling air when the cooling air flows upward and passes through the bed of the bulk material is reduced, and even if the cooling air is fed at a low pressure, the bulk material can be cooled down efficiently. Since chances for the bulk material grains that have large grain diameters to come into contact with the cooling air increase, the bulk material actively exchanges heat with the cooling air. Therefore, even if the flow rate per unit area of the cooling air is reduced, the bulk material can be cooled down efficiently, and thereby the cooling performance and the heat recovery performance of the bulk material cooling device are improved. Since the cooling air is utilized for the separation of fine grains, it is not necessary to additionally include a device dedicated for the separation of fine grains. In the above-described manner, the energy efficiency of the bulk material cooling device can be improved.

The bulk material cooling device may include a receiving part provided upstream from the fine grain separating part and configured to receive the bulk material. The receiving part may constitute a front-stage cooling part configured to feed cooling air flowing upward to the bulk material.
According to this configuration, the bulk material can be cooled down as rapidly as possible. Moreover, even if feeding the cooling air at the front-stage cooling part has caused a state where the bulk material grains that have different grain diameters from each other are mixed together, the filling rate can be reduced by means of the fine grain separating part, which is provided downstream from the front-stage cooling part. Therefore, at the front-stage cooling part, the setting of the cooling air can be made particularly intended for the cooling of the bulk material.

The fine grain separating part may be provided in a manner to immediately follow the receiving part, such that the fine grain separating part is continuous with the receiving part. According to this configuration, fine grains can be separated immediately after the bed of the bulk material is formed at the receiving part. In this manner, the fine grains are separated as early as possible to reduce the filling rate. Consequently, a wider area is covered by the rear-stage cooling part, and thereby energy efficiency is improved favorably.

The fine grain separating part may feed the cooling air to cause the bulk material to be in a state of immediately before start of fluidization of the fine grains. According to this configuration, only the fine grains can be efficiently separated to the upper side of the bed, and also, a situation where the fluidization progresses to cause unwanted increase in pressure loss or to cause degradation in heat exchange performance can be prevented from occurring.

The bulk material may be cement clinker. The receiving part may receive the cement clinker from a kiln for sintering cement raw meal. The grain diameter of the cement clinker varies relatively widely. Since the cement clinker fed to the receiving part is in the state of having a high temperature of about 1400 °C due to the firing in the kiln, the amount of heat that can be recovered from the cement clinker is significantly large. Therefore, functional advantages obtained from the separation of fine grains are significantly great.

A cooling method according to claim 3 is a method of cooling down a bed of a bulk material while conveying the bed of the bulk material, and includes: a fine grain separating step of feeding cooling air flowing upward to the bed of the bulk material, and by the cooling air, selectively separating fine grains in the bed of the bulk material to an upper side of the bed; and a rear-stage cooling step of feeding cooling air to the bed of the bulk material after the fine grain separating step, the cooling air having a flow rate per unit area less than the flow rate per unit area of the cooling air fed in the fine grain separating step.

According to the above method, similar to the above-described bulk material cooling device, in the fine grain separating step, fine grains present between the bulk material grains that have large grain diameters can be separated. Therefore, in the rear-stage cooling step, the bulk material can be cooled down efficiently even if the pressure and the flow rate of the cooling air are low.

### Advantageous Effects of Invention

As is clear from the above description, the present invention makes it possible to improve energy efficiency when cooling down a bed of a bulk material while conveying the bed of the bulk material. The above object, other objects, features, and advantages of the present invention will be made clear by the following detailed description of a preferred embodiment with reference to the accompanying drawings.

### Brief Description of Drawings

[Fig. 1] Fig. 1 is a conceptual diagram showing a pyroprocessing facility in a cement plant, the pyroprocessing facility including a clinker cooling device according to one embodiment of the present invention.
[Fig. 2] Fig. 2 is a perspective view of the clinker cooling device shown in Fig. 1.
[Fig. 3] Fig. 3 is a sectional side view showing part of a receiving part and part of a fine grain separating part shown in Fig. 2.
[Figs. 4A and 4B] Fig. 4A is a schematic diagram showing the state of cement clinker before fine grain separation is performed; and Fig. 4B is a schematic diagram showing the state of the cement clinker after the fine grain separation is performed.
[Fig. 5] Fig. 5 is a graph showing an example of grain size distribution of cement clinker.

### Description of Embodiments

Hereinafter, one embodiment of the present invention is described with reference to the drawings by taking, as an example, a case where a bulk material cooling device according to the present invention is applied to a clinker cooling device. In the drawings, the same or corresponding elements are denoted by the same reference signs, and repeating the same descriptions is avoided below.

### [Cement Plant]

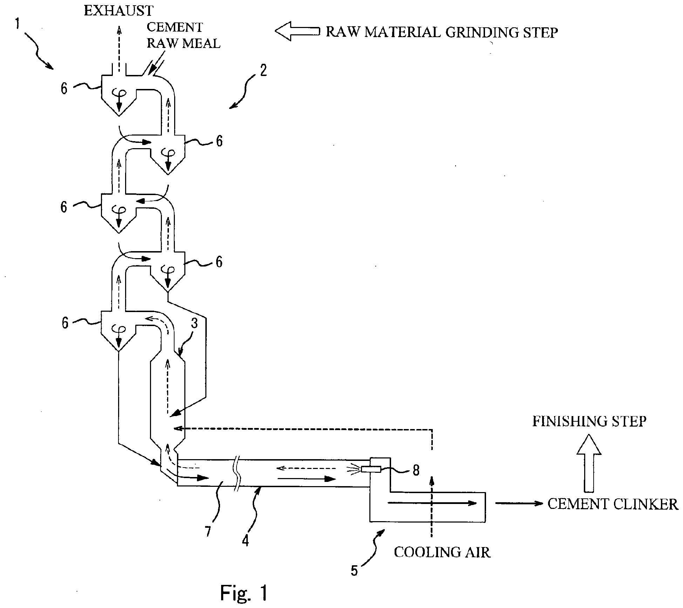

Fig. 1 is a conceptual diagram showing a pyroprocessing facility 1 in a cement plant, the pyroprocessing facility 1 including a clinker cooling device 5 according to the embodiment of the present invention. In the cement plant, a raw material grinding step, a pyroprocessing step, and a finishing step are performed sequentially in order to produce cement. The raw material grinding step is a step of grinding a cement raw material. The pyroprocessing step is a step of firing and rapidly cooling down the ground cement raw meal, and thereby granular or massive cement clinker is formed. The finishing step is a step of crushing the cement clinker, and thereby cement as a final product is produced.

Fig. 1 schematically shows the pyroprocessing facility 1 for performing the pyroprocessing step in the cement plant. Solid arrows indicate flows of the cement raw meal and cement clinker. Dotted arrows indicate flows of gas. As shown in Fig. 1, the pyroprocessing facility 1 inlcudes a preheater 2, a precalciner 3, a rotary kiln 4, and the clinker cooling device 5, which are sequentially connected in this order. The preheater 2 includes multi-stage cyclones 6, in which a plurality of cyclones are arranged vertically. The second lowermost cyclone 6 is connected to the inlet of the precalciner 3. The rotary kiln 4 is cylindrical, and its inlet and outlet are positioned at both axial ends of the rotary kiln 4, respectively. The rotary kiln 4 is disposed so as to be inclined such that the outlet of the rotary kiln 4 is positioned lower than the inlet of the rotary kiln 4. The rotary kiln 4 is rotatable around its central axis. A burner 8 is provided at the outlet of the rotary kiln 4. The burner 8 generates a high-temperature flame and combusted gas that are directed toward the inlet side of the rotary kiln 4. The inlet of the rotary kiln 4 is connected to the outlet of the precalciner 3 and the lowermost cyclone 6. The outlet of the rotary kiln 4 is connected to the clinker cooling device 5.

While being conveyed downward in the preheater 2, the cement raw meal is preheated before being subjected to a calcination reaction. The cement raw meal is guided from the preheater 2 to the precalciner 3, and calcined in the precalciner 3. The cement raw meal is preheated and calcined by exchanging heat with exhaust gas from the rotary kiln 4 and combusted gas in the precalciner 3. The exhaust gas from the rotary kiln 4 flows upward in the precalciner 3 and the preheater 2, and is discharged from the uppermost cyclone 6. The preheated and calcined cement raw meal is fed to the inlet of the rotary kiln 4. In the rotary kiln 4, the cement raw meal is sintered while being conveyed toward the outlet of the rotary kiln 4. The sintered cement raw meal becomes granular or massive, and is discharged from the outlet of the rotary kiln 4 to be fed to the clinker cooling device 5. Hereinafter, for the sake of convenience of the description of the configuration and functions of the clinker cooling device 5, a cement intermediate product that has been discharged from the outlet of the rotary kiln 4 is called "cement clinker" until the cement intermediate product is subjected to the finishing step.

The clinker cooling device 5 is fed with the cement clinker discharged from the rotary kiln 4. The clinker cooling device 5 conveys the fed cement clinker in the form of a bed, and while conveying the cement clinker bed, feeds cooling air to the cement clinker bed. In this manner, the cement clinker bed is rapidly cooled down from about 1400 °C to about the atmospheric temperature + 65 °C while being conveyed. It should be noted that the cooling air is heated by exchanging heat with the cement clinker bed. Part of the heated air is fed to the precalciner 3 and the rotary kiln 4, and used as combustion air. Since the heat of the heated air is recovered at the precalciner 3 and the rotary kiln 4, the fuel consumption rate of the pyroprocessing facility 1 can be improved.

### [Conveyance of Cement Clinker]

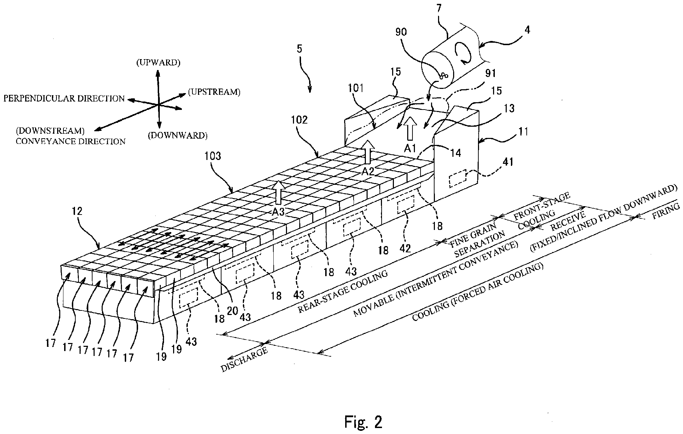

Fig. 2 is a perspective view of the clinker cooling device 5 shown in Fig. 1. It should be noted that, in Fig. 2, cement clinker 90 is not shown in the clinker cooling device 5 for the sake of convenience of the description. As shown in Fig. 2, the clinker cooling device 5 is configured to be elongated in a direction in which the cement clinker 90 is conveyed (hereinafter, "conveyance direction").

From the viewpoint of how the cooling air is fed to the cement clinker, the clinker cooling device 5 includes: a front-stage cooling part 101, a fine grain separating part 102 provided downstream from the front-stage cooling part 101 in the conveyance direction; and a rear-stage cooling part 103 provided downstream from the fine grain separating part 102 in the conveyance direction.

From the viewpoint of how the cement clinker is conveyed, the clinker cooling device 5 includes: a receiving part 11 configured to receive the cement clinker 90 fed from the rotary kiln 4; and a moving part 12 extending downstream in the conveyance direction from the receiving part 11. First, the configurations of the receiving part 11 and the moving part 12 are described.

The receiving part 11 includes a fixed inclined grate 13 provided below the outlet of the rotary kiln 4. The fixed inclined grate 13 includes an inclined surface 14. The inclined surface 14 is inclined downward from a position below the outlet of the rotary kiln 4, and extends toward the moving part 12, which is positioned downstream in the conveyance direction. The inclined surface 14 is formed in the shape of an isosceles trapezoid when seen in the normal direction to the inclined surface 14. The width of the inclined surface 14 increases as descending from the upstream portion of the inclined surface 14 (i.e., the portion blow the outlet of the rotary kiln 4) toward the downstream portion of the inclined surface 14 (i.e., the portion connected to the moving part 12). The receiving part 11 includes a pair of guide walls 15. The guide walls 15 extend upward from both sides of the inclined surface 14 in the width direction.

The cement clinker 90 discharged from the rotary kiln 4 drops onto the upstream portion of the inclined surface 14 of the fixed inclined grate 13. A deposit 91 of the cement clinker 90 remains in a mound-like manner on the upstream portion of the inclined surface 14. The cement clinker 90 dropping from the rotary kiln 4 slides over the deposit 91 and drops onto the inclined surface 14. Then, the cement clinker 90 rolls down along the inclined surface 14 and the guide walls 15 to the downstream portion of the inclined surface 14. Since the cement clinker 90 is caused to slide over the mound-like deposit 91, a large amount of cement clinker 90 discharged from the rotary kiln 4 can be evenly distributed in the width direction when fed to the moving part 12.

The moving part 12 includes: a plurality of movable floors 17, which are arranged in a direction perpendicular to the conveyance direction, the direction being different from the vertical direction (hereinafter, the direction is referred to as " the perpendicular direction"); and conveyance actuators 18 corresponding to the plurality of movable floors 17. Each movable floor 17 includes a plurality of moving grates 19 arranged in the conveyance direction. The plurality of moving grates 19 are fixed to an elongated frame 20, which is elongated in the conveyance direction.

The cement clinker bed fed from the receiving part 11 is supported on the plurality of movable floors 17. The cement clinker bed is laid out on the plurality of movable floors 17 entirely in the conveyance direction and entirely in the perpendicular direction. When the conveyance actuators 18 operate, driving force in the conveyance direction is imparted to the frame 20 that corresponds to the conveyance actuators 18. As a result, the frame 20 moves upstream or downstream in the conveyance direction, and the plurality of moving grates 19 fixed to the frame 20 move in the same direction at the same speed as the frame 20. In this manner, the movable floors 17 move in the conveyance direction in accordance with the operation of the conveyance actuators 18, and the cement clinker bed on the movable floors 17 is conveyed in accordance with the movement of the movable floors 17. In the present embodiment, the movable floors 17 are configured to move by means of a so-called tandem-sliding system, thereby conveying the cement clinker bed.

As shown in the drawings, typical movement of the movable floors 17 by means of the tandem sliding system and the conveyance of the cement clinker bed are described by taking the six movable floors 17 as one example. First, all the conveyance actuators 18 are caused to operate in synchronization with each other, such that all the movable floors 17 are caused to move downstream in synchronization with each other in the conveyance direction by a predetermined stroke from their initial positions (a forward moving step). As a result, the cement clinker bed on the movable floors 17 is collectively conveyed downstream in the conveyance direction. Next, some (e.g., two) of the six movable floors 17 (e.g., the first and fourth movable floors 17 counted from the leftmost movable floor 17 in Fig. 2) are caused to move upstream in the conveyance direction by the predetermined stroke to return to their initial positions (a returning step). In other words, the other movable floors 17 are caused to stay stationary. At the time, preferably, the number of movable floors that are caused to move is less than the number of movable floors that are caused to stay stationary. Moreover, in a case where a plurality of movable floors are caused to move, the movable floors that are caused to move are preferably not adjacent to each other. In a case where the movable floors 17 that are caused to move are selected in such a manner, even though the selected movable floors 17, i.e., part of the movable floors 17, move, the entire cement clinker bed is supported by the other stationary movable floors 17 and thereby stays stationary. Meanwhile, the movable floors 17 that are caused to move return to their initial positions by slidingly move relative to the stationary cement clinker bed. Thereafter, the movable floors 17 that are still remaining at the downstream side in the conveyance direction are caused to return upstream in the conveyance direction in the same manner. By repeating cycles of operations, each cycle including the above-described steps (e.g., each cycle including performing the forward moving step once and the returning step three times), the mere repetition of reciprocating movement of the movable floors 17 by the predetermined stroke causes the cement clinker bed to be conveyed downstream in the conveyance direction intermittently. It should be noted that even if the number of movable floors 17 is not six, the cement clinker bed can be conveyed in the same manner by means of the above-described tandem sliding system.

In the case where the movable floors 17 are caused to move by means of the tandem sliding system, the cement clinker bed on the movable floors 17 is collectively conveyed downstream in the conveyance direction in the forward moving step. As a result, the cement clinker flows from the receiving part 11 to the upstream end of the movable floors 17. In the present embodiment, since the cement clinker is supported on the inclined surface 14 at the receiving part 11, the cement clinker bed automatically and smoothly flows into the moving part 12. In the returning step, the entire cement clinker bed tends to stay stationary while the movable floors 17 move upstream. Therefore, at the downstream end of the moving movable floors 17, the cement clinker that can no longer be supported by the movable floors 17 drops. The cement clinker that drops in such a manner is collected and fed to the finishing step. As described above, in the case of adopting the tandem sliding system, the moving part 12 is fed with the cement clinker in the forward moving step, and discharges the cement clinker in the returning step.

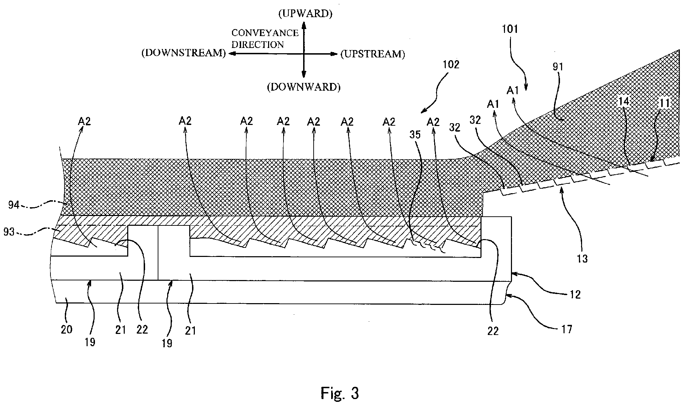

Fig. 3 is a partial sectional side view of the receiving part 11 and the upstream end of the moving part 12 shown in Fig. 2. As shown in Fig. 3, each moving grate 19 includes a box portion 21, which is substantially a rectangular parallelepiped and which is open upward. The box portion 21 includes a bottom wall 22 supporting the cement clinker bed. Accordingly, the cement clinker bed includes: a dead layer 93 contained inside each box portion 21; and a conveyed layer 94 layered on the rectangular frame-like upper end surface of each box portion 21 and the dead layer 93.

When the movable floors 17 move as described above, the dead layer 93, which is fully integrated with the box portions 21, moves downstream in the conveyance direction in the forward moving step. Meanwhile, the conveyed layer 94 is conveyed downstream in the conveyance direction although the conveyed layer 94 slides upstream in the conveyance direction relative to the box portions 21. In the returning step, the dead layer 93 fully integrated with the box portions 21 moves upstream in the conveyance direction. Meanwhile, the conveyed layer 94 does not follow the movement of the box portions 21. It can be considered that the dead layer 93 and the box portions 21 constitute the moving part 12. While the pyroprocessing facility 1 is in operation, the dead layer 93 remains on the box portions 21 in principle. It should be noted that, in the present embodiment, the height of the conveyed layer 94 is set to approximately 700 mm or greater.

### [Cooling of Cement Clinker]

As shown in Fig. 3, in order to feed cooling air flowing substantially upward to the cement clinker bed conveyed in the above-described manner, slits 32 elongated in the width direction (perpendicular direction) of the inclined surface 14 are formed in the inclined surface 14 of the fixed inclined grate 13. Slits 35 are formed in the bottom wall 22 of each of the moving grates 19. It should be noted that Fig. 3 shows the slits 35 being formed in only one of inclined surfaces of the bottom wall 22 and shows no slits being formed in the other inclined surfaces of the bottom wall 22. However, the slits are actually formed in the other inclined surfaces of the bottom wall 22 in the same manner. Through the slits 32, cooling air is fed to the clinker on the fixed inclined grate 13. Through the slits 35 and the dead layer 93 on the moving grates 19, cooling air is fed to high-temperature clinker positioned over the dead layer 93.

As shown in Fig. 2, as briefly described above, the clinker cooling device 5 according to the present embodiment includes: the front-stage cooling part 101; the fine grain separating part 102 provided downstream from the front-stage cooling part 101 in the conveyance direction; and the rear-stage cooling part 103 provided downstream from the fine grain separating part 102 in the conveyance direction.

The front-stage cooling part 101 is provided such that, in the conveyance direction, the front-stage cooling part 101 is positioned upstream from the boundary between the receiving part 11 and the moving part 12. The receiving part 11 constitutes the front-stage cooling part 101. The front-stage cooling part 101 includes the aforementioned fixed inclined grate 13 and a first cooling fan 41 provided in a space below the fixed inclined grate 13. The first cooling fan 41 takes in air from the atmosphere, and pressure-feeds cooling air A1. The cooling air A1 pressure-fed from the first cooling fan 41 vertically passes through the fixed inclined grate 13 from below, then fed to the cement clinker in the receiving part 11, and thereafter flows substantially upward.

The fine grain separating part 102 is provided between the aforementioned boundary, which lies between the receiving part 11 and the moving part 12, and a position that is away from the boundary toward the downstream side in the conveyance direction by a certain distance. That is, in the present embodiment, the fine grain separating part 102 is provided at the upstream end of the moving part 12 in the conveyance direction, such that the fine grain separating part 102 is continuous with, i.e., immediately follows, the front-stage cooling part 101. The aforementioned certain distance is the length of the fine grain separating part 102 in the conveyance direction, the length corresponding to a few of the plurality of moving grates 19 arranged in the conveyance direction. The cement clinker bed passes the fine grain separating part 102 by taking a time of about 1 to 2 minutes, for example. The actual length of the fine grain separating part 102 in the conveyance direction is determined by taking account of the balance of the entire device. The fine grain separating part 102 includes: the moving grates 19 that are included within the certain distance; and a second cooling fan 42 provided in a space below the moving grates 19. The second cooling fan 42 takes in air from the atmosphere, and pressure-feeds cooling air A2. The cooling air A2 pressure-fed from the second cooling fan 42 vertically passes through the moving grates 19 that correspond to the fine grain separating part 102 from below, then fed to the cement clinker bed on the movable floors 17, and thereafter flows substantially upward.

The rear-stage cooling part 103 is continuous with, i.e., immediately follows, the fine grain separating part 102. The rear-stage cooling part 103 extends to reach the downstream end of the moving part 12 in the conveyance direction. In this manner, in the present embodiment, the fine grain separating part 102 and the rear-stage cooling part 103 constitute the moving part 12. The rear-stage cooling part 103 includes: the moving grates 19 that are positioned downstream from the fine grain separating part 102 among the plurality of moving grates 19 arranged in the conveyance direction; and third cooling fans 43 provided in a space below these moving grates 19. In the present embodiment, since the rear-stage cooling part 103 is relatively long in the conveyance direction, the rear-stage cooling part 103 includes a plurality of third cooling fans 43. The plurality of third cooling fans 43 are arranged such that they are spaced apart from each other in the conveyance direction. Each third cooling fan 43 takes in air from the atmosphere, and pressure-feeds cooling air A3. The cooling air A3 pressure-fed from each third cooling fan 43 vertically passes through the moving grates 19 that correspond to the third cooling fan 43 from below, then fed to the cement clinker bed on the movable floors 17, and thereafter flows substantially upward.

Focusing on the arrangement of the fans, the first cooling fan 41, the second cooling fan 42, and the plurality of third cooling fans 43 are arranged from the receiving part 11 to the downstream portion of the moving part 12 in the conveyance direction, such that the fans are spaced apart from each other in the conveyance direction. While the plurality of movable floors 17 are in operation, the cooling fans 41 to 43 also continue operating. Accordingly, while the cement clinker bed is being conveyed from the receiving part 11 to the downstream end of the moving part 12 in the conveyance direction, i.e., while the cement clinker bed is passing the front-stage cooling part 101, the fine grain separating part 102, and the rear-stage cooling part 103 in this order, the cooling air is continuously fed to the cement clinker bed, and thereby the cement clinker bed is rapidly cooled down. It should be noted that the flow rate of the cooling air per unit area is substantially uniform in the perpendicular direction, showing almost no gradient. Accordingly, the cement clinker bed is cooled down as uniformly as possible in the perpendicular direction. The term "flow rate per unit area" can be defined as the volume of the flowing cooling air per unit area per unit time [Nm³/m²·s] under standard conditions (0 °C, 1 atm). The unit area can be calculated with reference to the plane area of the entire region assigned to each of the cooling fans 41 to 43.

In the present embodiment, the flow rate per unit area of the cooling air A2 at the fine grain separating part 102 is less than the flow rate per unit area of the cooling air A1 at the front-stage cooling part 101, but greater than the flow rate per unit area of the cooling air A3 at the rear-stage cooling part 103. Since the flow rate is varied from fan to fan in this manner, the clinker cooling device 5 provides special functional advantages as described below when cooling down the cement clinker bed while conveying the cement clinker bed.

Specifically, the flow rate per unit area of the cooling air A1 at the front-stage cooling part 101 is set to be greater than the flow rate per unit area of the cooling air at the other parts (in particular, greater than the flow rate per unit area of the cooling air at the fine grain separating part 102). Accordingly, the cement clinker fed from the rotary kiln 4 is cooled down as rapidly as possible. As previously described, the cement clinker bed is evenly distributed in the width direction by means of the deposit 91. Therefore, at the receiving part 11, the height of the cement clinker bed can be stabilized in the width direction. Moreover, if the flow rate is great, the Coanda effect of the cooling air A1 is exerted favorably when the cooling air A1 passes through the fixed inclined grate 13. As a result, in the forward moving step of the movable floors 17, the cement clinker bed with the stable height can be fed to the moving part 12 automatically and smoothly along the inclined surface 14. While the plurality of movable floors 17 are in operation, the above-described functions are exerted continuously. As a result, the height of the cement clinker bed fed to the moving part 12 is stabilized in both the conveyance direction and the perpendicular direction. This makes it possible to reduce uneven cooling of the cement clinker bed.

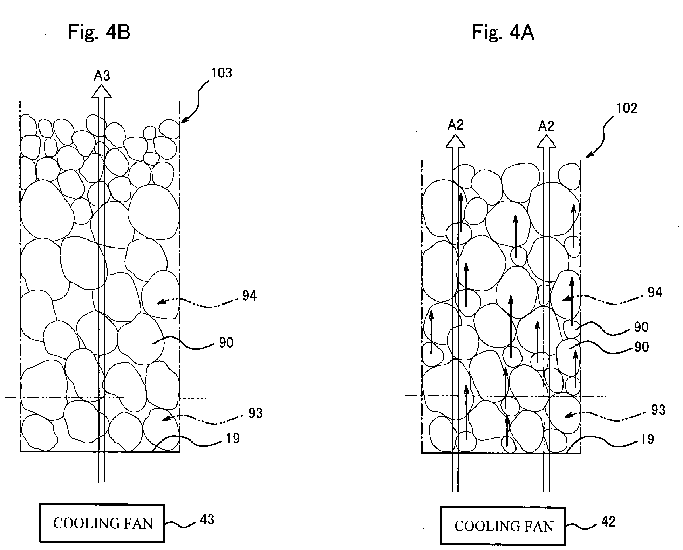

Fig. 4A is a schematic diagram showing the state of the cement clinker immediately after the cement clinker is fed from the front-stage cooling part 101 to the fine grain separating part 102. Fig. 4B is a schematic diagram showing the state of the cement clinker immediately after the cement clinker is fed from the fine grain separating part 102 to the rear-stage cooling part 103. That is, at the fine grain separating part 102, the state of the cement clinker changes from the one shown in Fig. 4A to the one shown in Fig. 4B.

As shown in Fig. 4A, the grain diameter of the cement clinker widely varies in the range of 1 mm to 25 mm. Thus, there is a relatively wide variation in the grain diameter of the cement clinker. Therefore, in the process of being conveyed along the inclined surface 14 at the front-stage cooling part 101, the cement clinker bed becomes a state where the cement clinker grains with various grain diameters are mixed together, while the cement clinker bed is rapidly cooled down. Immediately after being fed to the fine grain separating part 102, the cement clinker bed, at least the conveyed layer 94, is in such a state.

When the cement clinker grains with various grain diameters are mixed together in the bed in this manner, the cement clinker grains that have small grain diameters gain entry between the cement clinker grains that have large grain diameters. Consequently, the filling rate of the conveyed layer 94 in its height direction remains at a substantially constant high value. Meanwhile, the cooling air A2 from the second cooling fan 42 passes through gaps formed between the surfaces of the cement clinker grains, thereby flowing substantially upward inside the cement clinker bed. If the filling rate is high (i.e., if the gaps are narrow), pressure loss of the cooling air A2 when the cooling air A2 passes through the cement clinker bed (hereinafter, the pressure loss is referred to as "clinker-passing pressure loss") becomes great. In addition, if the filling rate is high, there is a possibility that most of the surfaces of the cement clinker grains that have large grain diameters are in contact with the surfaces of the cement clinker grains that have small grain diameters. As a result, it becomes difficult for the cement clinker grains that have large grain diameters to come into contact with the cooling air.

In view of this, at the fine grain separating part 102, the cooling air that flows substantially upward is fed to the cement clinker bed, and by utilizing the cooling air A2, fine grains among the grains in the cement clinker bed are selectively separated to the upper side of the bed. In other words, the second cooling fan 42 pressure-feeds the cooling air A2, which has a pressure and flow rate necessary for selectively pushing up the fine grains to the upper side of the bed. The fine grains are moved to the upper side of the bed in such a manner that the fine grains together with the cooling air A2 pass through the gaps between the other cement clinker grains, or in such a manner that the fine grains pushed by the cooling air A2 push away the other cement clinker grains.

Generally speaking, in accordance with an increase in the flow rate of air fed into a powder and granular material bed, the powder and granular material bed transitions from a fixed bed through a minimum fluidized bed and a uniform fluidized bed into a bubbling fluidized bed in this order. If the flow rate is further increased, then slugging, turbulent fluidization, and fast fluidization occur in this order. Moreover, generally speaking, if the grain diameter of a powder and granular material increases, then the flow rate necessary for realizing the same fluidized state increases (e.g., a uniform fluidized state, a bubbling fluidized state, or a slugging state). In other words, the less the grain diameter, the faster the transition into such a fluidized state as mentioned above.

In the present embodiment, the wording "state of immediately before becoming fluidized" refers to, at least, a state of immediately before transitioning into a bubbling fluidized bed, preferably, a state of immediately before becoming uniform-fluidized or minimum-fluidized. Accordingly, the flow rate of the cooling air A2 is preferably set to be less than, at least, the bubble generation rate of the cement clinker grains that have the maximum grain diameter among the fine grains to be separated. The reason for this is that if the fluidization of the cement clinker is accelerated to such a degree as to cause bubbling fluidization, then the clinker-passing pressure loss becomes significantly great, which causes a necessity to increase the pressure of the cooling fan. Another reason is that if the fluidization of the cement clinker is accelerated to such a degree as to cause uniform fluidization, then there is a possibility that the temperature becomes evened out at a portion where the uniform fluidization occurs, which may result in a situation where even though the cooling air is fed, heat cannot be efficiently recovered from the cement clinker. Accordingly, the flow rate of the cooling air is set to such a flow rate as not to cause bubbling fluidization and uniform fluidization of the cement clinker. With such setting, the pressure and flow rate of the cooling air are prevented from becoming unnecessarily high; the cement clinker can be cooled down efficiently; and heat can be efficiently recovered from the cement clinker.

In the present embodiment, the selection of the size of the fine grains to be separated is not particularly limited, so long as the size is selected within a range that allows an effect described below (i.e., reduction of the filling rate in the lower side of the bed) to be obtained. For example, the fine grains may be, among the cement clinker grains contained in the cement clinker bed on the movable floors 17, the cement clinker grains that have a grain diameter of about 6 mm or less. Moreover, the fine grains may account for 20 to 30 % of the cement clinker grains contained in the cement clinker bed on the movable floors 17 in terms of cumulative percentage by weight.

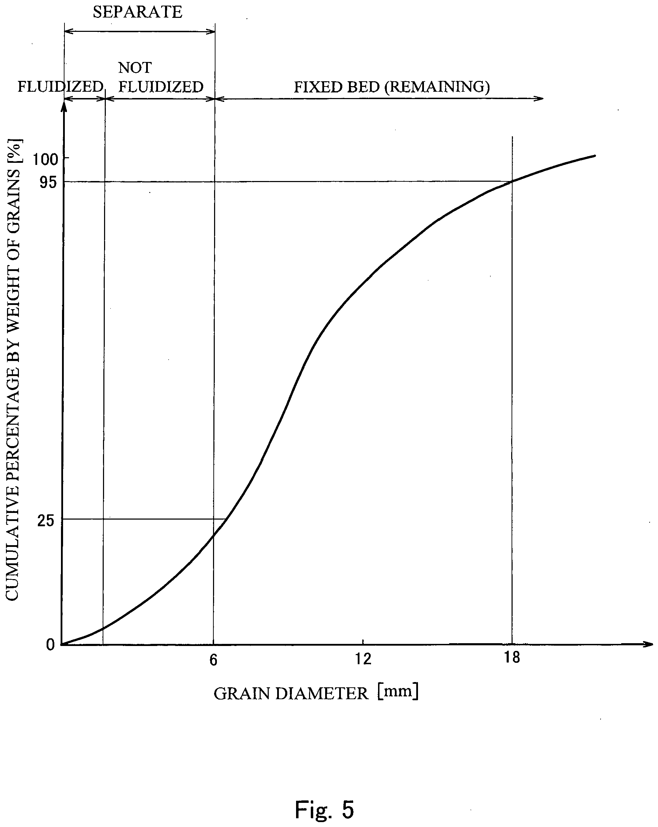

The grain size distribution of the cement clinker varies in accordance with the composition and other conditions of the cement raw material. Fig. 5 shows one example of the grain size distribution in a conceptual manner. In cement clinker with a particular grain size distribution, fine grains having a grain diameter of 6 mm or less account for about 25 % of the total cement clinker grains in terms of cumulative percentage by weight. In this example, the inventors of the present invention conducted an experiment. From results of the experiment, it has been confirmed that by setting the flow rate of the cooling air A2 to 1.25 to 1.45 [Nm³/m²·s], the grains having a grain diameter of 6 mm or less, which account for about 25 % of the total cement clinker grains in terms of cumulative percentage by weight, can be caused to be in the state of immediately before becoming fluidized and can be selectively separated to the upper side of the bed. At the time, although the cement clinker grains that have extremely small grain diameters become fluidized, fine grains having relatively large grain diameters among the separated fine grains become such a state where uniform fluidization is not caused, i.e., the state of immediately before becoming fluidized.

Causing the fine grains to be in the state of immediately before becoming fluidized and selectively separating the fine grains to the upper side of the bed is substantially the same in meaning as selectively keeping the cement clinker grains that have large grain diameters in the lower side of the bed as a fixed bed. As shown in Fig. 4B, as a result of the fine grain separation, fine grains previously present between the cement clinker grains that have large grain diameters are eliminated from the lower side of the bed, while the cement clinker grains that have large grain diameters remain in the lower side of the bed. As a result, the filling rate is reduced in the lower side of the bed. The separation of the fine grains is realized by feeding the cooling air A2. Therefore, the cement clinker, which is fed with the cooling air A2, is cooled down favorably.

At the rear-stage cooling part 103 provided downstream from the fine grain separating part 102, the clinker-passing pressure loss of the cooling air A3 fed from the third cooling fan 43 is relatively small. For this reason, at the rear-stage cooling part 103, even if the pressure of the cooling air A3 is low, the cooling air A3 easily passes through the cement clinker bed, and the cement clinker bed can be suitably cooled down. In the lower side of the bed, owing to the reduction in the filling rate, more portions of the surfaces of coarse grains become well exposed to the gaps. As a result, chances for the coarse grains to come into contact with the cooling air A3 increase, which allows the coarse grains to efficiently exchange heat with the cooling air A3. Therefore, even if the flow rate of the cooling air A3 is low, the coarse grains are suitably cooled down. In this manner, the flow rate of the cooling air fed to the moving part 12 can be reduced as a whole, and yet the cement clinker can be cooled down favorably and the cooling performance can be improved. In a case where the flow rate of the cooling air A2 is set to the aforementioned numerical value, even if the flow rate of the cooling air A3 is set to, for example, 0.6 to 0.8 [Nm³/m²·s], the cement clinker bed can be cooled down to an intended temperature as necessary. It should be noted that in a case where the flow rates of the cooling air A2 and the cooling air A3 are set to the aforementioned numerical values, the flow rate of the cooling air A1 can be set to, for example, 1.60 to 1.55 [Nm³/m²·s].

As described above, the clinker cooling device 5 according to the present embodiment is configured such that, in order to reduce the filling rate of at least part of the cement clinker bed, the flow rate of the cooling air is locally increased, and thereby fine grains are separated to the upper side of the bed. In this manner, the pressure and the flow rate of the cooling fans can be reduced as a whole, and yet the cement clinker can be cooled down similarly to conventional art. As a result, the cooling performance and the heat recovery performance of the clinker cooling device 5 are improved. Accordingly, the energy efficiency of the clinker cooling device 5 is improved. Consequently, the fuel consumption rate of the entire facility performing the pyroprocessing step is improved favorably. After the cooling air A1 is fed at the front-stage cooling part 101, fine grains are separated at the fine grain separating part 102. Therefore, at the front-stage cooling part 101, the setting of the cooling air can be made particularly intended for the cooling of the cement clinker, and thereby the cement clinker can be suitably cooled down immediately after the cement clinker is discharged from the rotary kiln 4.

### [Variations]

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

For example, it is not essential for the fine grain separating part 102 to immediately follow the receiving part 11. A cooling air feeding part configured to feed cooling air at a flow rate that is insufficient for separating fine grains may be provided between the receiving part 11 and the fine grain separating part 102. However, in the case where the fine grain separating part 102 is provided in a manner to immediately follow the receiving part 11, the filling rate reduction through the fine grain separation is achieved as upstream as possible in the conveyance direction. As a result, cooling efficiency is improved favorably.

There are cases where the moving part 12 is configured as a two-story type. A typical two-story moving part includes: an upper story extending downstream in the conveyance direction from the receiving part; and a lower story extending downstream in the conveyance direction from right below the downstream end of the upper story in the conveyance direction. In this case, the fine grain separating part 102 may be provided not only on the upper story at its portion immediately following the receiving part, but also on the lower story at its upstream end portion in the conveyance direction. (These positions are both located downstream from the receiving part.) With this configuration, after the cement clinker bed drops from the upper story onto the lower story, fine grains in the cement clinker bed can be separated again, which makes it possible to reduce the flow rate and the pressure of the cooling air that is fed at the lower story.

The fine grain separating part 102 may be provided with a plurality of second cooling fans 42, and the plurality of second cooling fans 42 may be arranged in the conveyance direction. In this case, the flow rates of the respective second cooling fans 42 may be different from each other, so long as each flow rate is in a range necessary for separating fine grains. The plurality of third cooling fans 43 provided in the rear-stage cooling part 103 may be configured to pressure-feed the cooling air at the same flow rate, or at different flow rates from each other. The same is true of the first cooling fan 41. In the above-described embodiment, in order to simplify the description, at each of the front-stage cooling part 101, the fine grain separating part 102, and the rear-stage cooling part 103, the number of cooling fans provided in the perpendicular direction is one. However, as an alternative, a plurality of cooling fans may be arranged in the perpendicular direction.

The cement clinker may be conveyed not by means of a tandem sliding system but by means of a so-called pendular sliding system, for example. The structures of the fixed inclined grate 13 and the moving grates 19 as well as the manner of ejecting the cooling air are not limited to the above-described ones. It should be noted that although the separation of fine grains may be performed differently from the above-described manner, the use of cooling air flowing upward is useful, because in this a case, it is not necessary to additionally include a device dedicated for the separation of fine grains.

The bulk material cooling device according to the present invention is suitably applicable to any device, so long as the device is configured to: convey a bed of a bulk material; and feed cooling air that flows substantially upward to cool down the bed of the bulk material while conveying the bed of the bulk material. In view of the fact that the grain diameter of cement clinker that is produced by firing cement raw meal varies and the amount of heat retained by the cement clinker is great, the separation of fine grains brings significant functional advantages to clinker cooling devices for cooling down cement clinker. Therefore, the present invention is suitably applicable particularly to clinker cooling devices.

### Industrial Applicability

The present invention provides a functional advantage of being able to improve energy efficiency when cooling down a bed of a bulk material while conveying the bed of the bulk material, and is useful when applied to a clinker cooling device included in a pyroprocessing facility of a cement plant.

### Reference Signs List

- 1: pyroprocessing facility
- 2: preheater
- 3: precalciner
- 4: rotary kiln
- 5: clinker cooling device (bulk material cooling device)
- 11: receiving part
- 12: moving part
- 13: fixed inclined grate
- 14: inclined surface
- 17: movable floor
- 19: moving grate
- 32, 35: slit
- 41 to 43: cooling fan
- 90: cement clinker (bulk material)
- 93: dead layer
- 94: conveyed layer
- 101: front-stage cooling part
- 102: fine grain separating part
- 103: rear-stage cooling part

## Claims

1. A cement clinker cooling device (5) for cooling down a bed of a cement clinker (90) discharged from a kiln (4) while conveying the bed of the cement clinker (90), the cement clinker cooling device comprising:
a fine grain separating part (102) configured to feed cooling air flowing upward to the bed of the cement clinker, and by the cooling air, selectively separate fine grains in the bed of the cement clinker to an upper side of the bed; and
a rear-stage cooling part (103) provided downstream from the fine grain separating part (102) and configured to feed cooling air to the bed of the cement clinker, the cooling air having a flow rate per unit area less than the flow rate per unit area of the cooling air fed at the fine grain separating part;
**characterized by**
a receiving part (11) provided upstream from the fine grain separating part (102) and configured to receive the cement clinker (90), wherein
the receiving part constitutes a front-stage cooling part (101) configured to feed cooling air flowing upward to the cement clinker (90), wherein the flow rate per unit area of the cooling air (A2) at the fine grain separating part (102) is less than the flow rate per unit area of the cooling air (A1) at the front-stage cooling part (101).

2. The cement clinker cooling device (5) according to claim 1 or 2, wherein
the fine grain separating part (102) is provided in a manner to immediately follow the receiving part (11), such that the fine grain separating part (102) is continuous with the receiving part (11).

3. A cement clinker cooling method of cooling down a bed of a cement clinker (90) discharged from a kiln (4) while conveying the bed of the cement clinker (90), the method comprising:
a front-stage cooling step of feeding cooling air flowing upward to the cement clinker (90) that has been received by a receiving part (11);
a fine grain separating step of feeding cooling air flowing upward to the bed of the cement clinker (90), and by the cooling air, selectively separating fine grains in the bed of the cement clinker (90) to an upper side of the bed after the front-stage cooling step, the cooling air having a flow rate per unit area less than the flow rate per unit area of the cooling air fed in the front-stage cooling step; and
a rear-stage cooling step of feeding cooling air to the bed of the cement clinker (90) after the fine grain separating step, the cooling air having a flow rate per unit area less than the flow rate per unit area of the cooling air fed in the fine grain separating step.

## Patentansprüche

1. Zementklinker-Kühlvorrichtung (5) zur Kühlung eines aus einem Zementofen (4) ausgetragenen Zementklinker (90) -betts, während das Zementklinker (90) -bett befördert wird, wobei die Zementklinker-Kühlvorrichtung umfasst:
einen Teil (102) zur Feinkorntrennung, der dazu konfiguriert ist, Kühlungsluft zuzuführen, die nach oben zu dem Zementklinkerbett strömt, und durch die Kühlungsluft wahlweise feine Körner in dem Zementklinkerbett zu einer oberen Seite des Betts abzutrennen; und
einen hinteren Kühlteil (103), der stromabwärts von dem Teil (102) zur Feinkorntrennung angeordnet ist und dazu konfiguriert ist, dem Zementklinkerbett Kühlungsluft zuzuführen, wobei die Kühlungsluft eine Durchflussrate pro Flächeneinheit aufweist, welche geringer ist als eine Durchflussrate pro Flächeneinheit der an dem Teil zur Feinkorntrennung zugeführten Kühlungsluft;
**gekennzeichnet durch**
einen Aufnahmeteil (11), der stromaufwärts von dem Teil (102) zur Feinkorntrennung angeordnet ist und dazu konfiguriert ist, den Zementklinker (90) aufzunehmen, wobei
der Aufnahmeteil einen vorderen Kühlteil (101) umfasst, der dazu konfiguriert ist, Kühlungsluft zuzuführen, die nach oben zu dem Zementklinker (90) strömt, wobei die Flussrate pro Flächeneinheit der Kühlungsluft (A2) in dem Teil (102) zur Feinkorntrennung kleiner als die Flussrate pro Flächeneinheit der Kühlungsluft (A1) des vorderen Kühlteils (101) ist.

2. Zementklinker-Kühlvorrichtung (5) gemäß Anspruch 1, wobei
der Teil (102) zur Feinkorntrennung derart angeordnet ist, dass er unmittelbar auf den Aufnahmeteil (11) folgt, so dass der Teil (102) zur Feinkorntrennung mit dem Aufnahmeteil (11) durchgehend ist.

3. Zementklinker-Kühlverfahren zur Kühlung eines aus einem Zementofen (4) ausgetragenen Zementklinker (90) -betts, während das Zementklinker (90) -bett befördert wird, wobei das Verfahren umfasst:
einen vorderen Kühlungsschritt, bei dem Kühlungsluft zugeführt wird, die nach oben zu dem Zementklinker (90), der von einem Aufnahmeteil (11) aufgenommen worden ist, strömt;
einen Schritt zur Feinkorntrennung, bei dem Kühlungsluft zugeführt wird, die nach oben zu dem Zementklinker (90) -bett strömt, und bei dem nach dem vorderen Kühlungsschritt durch die Kühlungsluft wahlweise feine Körner in dem Zementklinker (90) -bett zu einer oberen Seite des Betts abgetrennt werden, wobei die Kühlungsluft
eine Flussrate pro Flächeneinheit hat, die kleiner als die Flussrate pro Flächeneinheit der in den vorderen Kühlungsschritt eingespeisten Kühlungsluft ist.

## Revendications

1. Dispositif de refroidissement de scories de ciment (5) destiné à refroidir un lit de scories de ciment (90) évacué d'un four (4) tout en transportant le lit de scories de ciment (90), le dispositif de refroidissement de scories de ciment comprenant :
une partie de séparation des grains fins (102) configurée pour apporter de l'air de refroidissement selon un écoulement ascendant au lit de scories de ciment, et sous l'effet de l'air de refroidissement, séparer sélectivement les grains fins du lit de scories de ciment vers un côté supérieur du lit ; et
une partie de refroidissement postérieure (103) prévue en aval de la partie de séparation des grains fins (102) et configurée pour apporter de l'air de refroidissement au lit de scories de ciment, l'air de refroidissement ayant un débit par unité de surface qui est inférieur au débit par unité de surface de l'air de refroidissement apporté à la partie de séparation des grains fins ;
**caractérisé par**
une partie de réception (11) prévue en amont de la partie de séparation des grains fins (102) et configurée pour recevoir les scories de ciment (90), dans lequel
la partie de réception constitue une partie de refroidissement antérieure (101) configurée pour apporter de l'air de refroidissement selon un écoulement ascendant aux scories de ciment (90), dans lequel le débit par unité de surface de l'air de refroidissement (A2) à la partie de séparation des grains fins (102) est inférieur au débit par unité de surface de l'air de refroidissement (A1) à la partie de refroidissement antérieure (101).

2. Dispositif de refroidissement de scories de ciment (5) selon la revendication 1, dans lequel
la partie de séparation des grains fins (102) est prévue de manière à faire immédiatement suite à la partie de réception (11), de manière que la partie de séparation des grains fins (102) est continue à la partie de réception (11).

3. Procédé de refroidissement de scories de ciment destiné à refroidir un lit de scories de ciment (90) évacué d'un four (4) tout en transportant le lit de scories de ciment (90), le procédé comprenant :
une étape de refroidissement antérieure consistant à apporter de l'air de refroidissement selon un écoulement ascendant aux scories de ciment (90) reçues par une partie de réception (11) ;
une étape de séparation des grains fins consistant à apporter de l'air de refroidissement selon un écoulement ascendant au lit de scories de ciment (90), et sous l'effet de l'air de refroidissement, séparer sélectivement les grains fins du lit de scories de ciment (90) vers un côté supérieur du lit après l'étape de refroidissement antérieure, l'air de refroidissement ayant un débit par unité de surface qui est inférieur au débit par unité de surface de l'air de refroidissement apporté à l'étape de refroidissement antérieure ; et
une étape de refroidissement postérieure consistant à apporter de l'air de refroidissement au lit de scories de ciment (90) après l'étape de séparation des grains fins, l'air de refroidissement ayant un débit par unité de surface qui est inférieur au débit par unité de surface de l'air de refroidissement apporté à l'étape de séparation des grains fins.
